Europäisches Patentamt

European Patent Office

Office européen des brevets

(19)

(11) Veröffentlichungsnummer: **0 254 756**
**B1**

(12) **EUROPÄISCHE PATENTSCHRIFT**

(45) Veröffentlichungstag der Patentschrift:
**12.04.89**

(51) Int. Cl.⁴: **G01C 19/64**

(21) Anmeldenummer: **86110428.9**

(22) Anmeldetag: **29.07.86**

(54) Verfahren zur Drehratenmessung mittels eines passiven optischen Resonators.

(43) Veröffentlichungstag der Anmeldung:
**03.02.88 Patentblatt 88/5**

(45) Bekanntmachung des Hinweises auf die Patenterteilung:
**12.04.89 Patentblatt 89/15**

(84) Benannte Vertragsstaaten:
**DE FR GB IT NL SE**

(56) Entgegenhaltungen:
**EP-A- 0 074 609**
**EP-A- 0 172 391**

(73) Patentinhaber: **LITEF GmbH, Lörracher Strasse 18,
D-7800 Freiburg/Br.(DE)**

(72) Erfinder: **Schröder, Werner, Dr., Mittelweg 22,
D-7801 Umkirch(DE)**

(74) Vertreter: **Patentanwälte TER MEER - MÜLLER -
STEINMEISTER, Mauerkircherstrasse 45,
D-8000 München 80(DE)**

ACTORUM AG

## Beschreibung

Die Erfindung betrifft ein Verfahren zur Drehratenauslesung mittels eines passiven optischen Ringresonators, bei dem Licht aus einer abgestimmten kohärenten Lichtquelle ein Modenfilter durchläuft, in zwei Teillichtstrahlen aufgespalten und in entgegengesetzten Richtungen in einen Ringresonator eingestrahlt wird, und bei dem Lichter beider Umlaufrichtungen wieder ausgekoppelt werden.

Neben dem aktiven Resonator (Laserkreisel) und dem Sagnac-Interferometer eignet sich der passive Resonator zur Drehratenmessung auf optischem Wege unter Ausnutzung des Sagnac-Effekts (G. Sagnac: C.R. Acad. Sci. Paris 95, 708 (1913)).

Vor annähernd 10 Jahren untersuchten S. Ezekiel und S.R. Balsamo am Massachusetts Institute of Technology (USA) den passiven Ringresonator auf seine Eignung als Drehratensensor. Eine erste grundlegende technische Lösung ist in der US-A 4 135 822 beschrieben. Erste experimentelle Ergebnisse wurden kurze Zeit später veröffentlicht (Appl. Phys. Lett. 30, 478 (1977)). Stetige Weiterentwicklung des Experimentalmodells führte zu einem Drehratensensor mit inertialer Genauigkeit unter Laborbedingungen (Opt. Lett. 6, 569 (1981)).

Wenngleich die Resonatoren der Experimentalmodelle in Spiegeltechnik ausgeführt waren, so wurde schon frühzeitig die Möglichkeit eines Faserresonators für zukünftige Entwicklungen in Betracht gezogen (vgl. US-A 4 135 822). Eine Ausführung in Fasertechnik scheiterte jedoch zunächst an den technischen Möglichkeiten. Mit Hilfe eines kommerziellen Kopplers hoher Güte konnte jedoch ein Resonator verwirklicht werden, mit dem erfolgreiche Messungen durchgeführt wurden (R.E. Meyer et al.: Passive Fiberoptic Ring Resonator for Rotation Sensing, Preprint MIT 1983).

Parallellaufende Forschungsarbeiten in USA, insbesondere am E.L. Ginzton Labor der Stanford University in Kalifornien, führten zur Entwicklung eines verlustarmen Faserrichtkopplers (Electron. Lett. 16, 260 (1980)). Mit Kopplern dieses Typs gelang es, Resonatoren mit einer Finesse von 60 bis 90 herzustellen (vgl. L.F. Stokes et al.: Opt. Lett. 7, 288 (1982)). Kürzlich wurde von einem Faserringresonator mit einer Finesse von über 600 berichtet (M. Kemmler, K. Kempf, W. Schröder: Technical Digest, Optical Fiber Sensors 85, San Diego). Experimentelle Untersuchungen bezüglich der Eignung als Drehratensensor wurden bekannt (vgl. G.L. Report Nr. 3620, E.L. Ginzton Lab, Stanford University, September 1983).

Bekannt wurden auch Entwicklungen von passiven Resonatoren in integrierter Optik (vgl. US-A 4 326 803 und Firmenschrift: A. Lawrence, "The Micro-Optic Gyro", NORTHROP Precision Products Division, August 1983).

Die Ausführung des Resonators in Spiegeltechnik für einen Drehratensensor hat den Nachteil, daß das strenge Einhalten des axialen TEMoo-Modes im Resonator unter ungünstigen Umweltbedingungen schwierig ist. Bei einer Faserausführung des Resonators hingegen besteht gegenüber einem Sagnac-Interferometer wegen der wesentlich kürzeren, notwendigen Faserlänge der Vorteil einer geringeren Temperaturgradientenempfindlichkeit (vgl. D.M. Shupe: Appl. Opt. 20, 286 (1981)). Ein solcher Faserring kann jedoch zwei Eigenzustände der Polarisation tragen (vgl. B. Lamouroux et al.: Opt. Lett. 7, 391 (1982)). Die Kopplung dieser beiden Zustände durch Umwelteinflüsse führt zu Nullpunktschwankungen im Ausgangskanal.

Des weiteren werden bisher nur Single-Mode He-Ne-Laser als Lichtquellen verwendet. Die dabei auftretende Rückstreuung im Faserresonator ist eine wesentliche Ursache für die das Nutzsignal störenden Interferenzen. Die Verwendung einer oder mehrerer längerwelliger, kohärenter Lichtquellen führt zwar theoretisch zu einer Verbesserung in dieser Hinsicht, da die Rayleighstreuung der vierten Potenz der Lichtwellenlänge umgekehrt proportional ist. Bisher jedoch scheiterte die naheliegende Verwendung eines längerwelligen Halbleiterlasers an seiner für einen guten Faserresonator zu großen spektralen Breite. Eine bedeutende Verringerung der spektralen Breite eines Halbleiterlasers läßt sich durch Verwendung eines externen Resonators erzielen (S. Saito und Y. Yamamoto: Electr. Lett. 17, 325 (1981); M.W. Fleming und A. Mooradian: IEEE J. Quant. Electr. QE-17, 44 (1981)). Eine solche Lichtquelle kann durch Hinzufügen eines oder mehrerer dispersiver Elemente, Gitter und/oder Spiegel zum Halbleiterlaser oder durch Beschichten des Halbleiterlasers direkt erzielt werden, derart, daß die Güte des optischen Resonators erhöht wird. Es existieren auch bereits Vorschläge, den externen Resonator in Fasertechnik auszuführen (IEEE Transactions on Microwave Theory and Techniques, MTT-30, Nr. 10, 1700 (1982)).

Das Problem des Auftretens unerwünschter niederfrequenter Interferenzen im Nutzsignal aufgrund der Mischung einer Signalwelle mit dem rückgestreuten Anteil der gegenläufigen Welle tritt immer dann auf, wenn die beiden gegenläufigen Lichtwellen den gleichen longitudinalen Resonatormode besetzen. Eine bekannte Möglichkeit der Abhilfe ist die Phasenmodulation im zuführenden Lichtweg zum Resonator (Sanders et al.: Opt. Lett. 6, 569 (1981)).

Eine weitere Möglichkeit ist die Verwendung frequenzverschiebender Elemente, beispielsweise von Bragg-Zellen, so daß das Interferenzsignal zwischen vorwärts- und rückgestreutem Licht außerhalb der Detektionsbandbreite auftritt. Dieser Effekt der Bragg-Zellen wird z.B. in der Anordnung von EP-A 0 074 609, wenn auch nicht für einen Ringresonator, verwendet.

Allen bisher bekannten Resonatorausleseverfahren ist gemeinsam, daß sie nur die Intensitätsinformation des Ringresonators zur Drehratenauswertung heranziehen. Dabei treten jedoch besonders folgende Schwierigkeiten auf: Kreuzkopplung der beiden Polarisationseigenzustände des Ringresonators führen zu Instabilitäten des Nullpunkts des Kreiselausgangssignals. Zur Abhilfe muß eine reziproke Konfiguration gewählt werden, für die üblicherweise zwei Modenfilter (Raumfilter und Polarisator zusammen) verwendet werden.

Der Erfindung liegt die Aufgabe zugrunde, die Gewinnung des Drehratensignals bei der Drehratenauslesung mittels eines passiven optischen Resonators zu vereinfachen und die eindeutige Bestimmung des Drehratensignals zu verbessern.

Das erfindungsgemäße Verfahren zur Drehratenauslesung mittels eines passiven optischen Resonators gemäß der eingangs genannten Gattung ist so ausgebildet, daß
- die beiden Teillichtstrahlen vor Eintritt in und nach Austritt aus dem in Reflexion betriebenen Ringresonator um gleiche Frequenzwerte im entgegengesetzten Sinn frequenzverschoben werden;
- die Frequenzverschiebung mindestens hinsichtlich eines der Teillichtstrahlen moduliert wird;
- die Teillichtstrahlen der ausgekoppelten Lichtsignale zur Interferenz gebracht werden und in umgekehrter Richtung das Modenfilter passieren;
- das Interferenzsignal mittels eines opto-elektronischen Wandlers erfaßt wird; und daß
- das so gewonnene Interferenzsignal hinsichtlich der Modulationsfrequenz oder deren Harmonischen demoduliert und daraus das Drehratensignal gewonnen wird.

Der Erfindung liegt der Gedanke zugrunde, die Phaseninformation eines optischen Ringresonators in (angenäherter) Resonanz zur Gewinnung eines Drehratensignals auszunutzen.

Dazu ist es erforderlich, die entgegengesetzt umlaufenden Lichter am Ausgang, d. h. nach mehrfachem Umlauf im Resonator, auszukoppeln und nach Wiedervereinigung der beiden Lichter am Strahlenteiler zur Interferenz zu bringen.

Wie erwähnt, beruhen bekannte Resonatorauslesverfahren darauf, daß nur die Intensitätsinformation des Ringresonators zur Drehratenauswertung berücksichtigt wird. Ein Ringresonator, der in Reflexion betrieben wird, zeigt aber auch einen Phasensprung des Intensitätssignals von $2\pi$ beim Durchgang durch eine Resonanz.

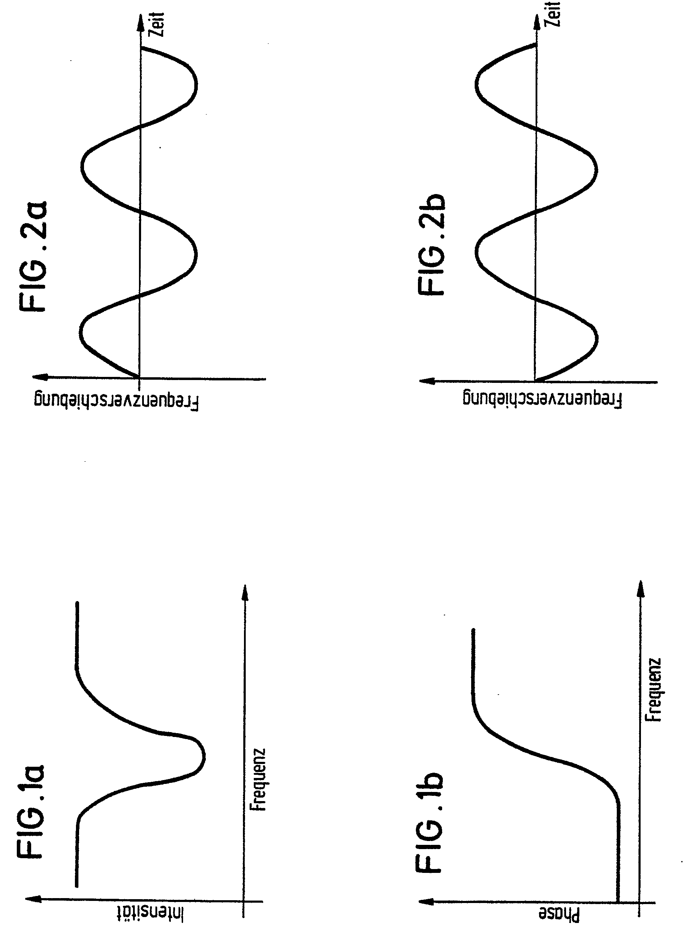

Die Fig. 1a der beigefügten Zeichnung zeigt den Intensitätsverlauf am Ausgang eines Resonators, der in Reflexion betrieben wird; Fig. 1b den entsprechenden Verlauf der Phase zwischen Ein- und Ausgang des Resonators.

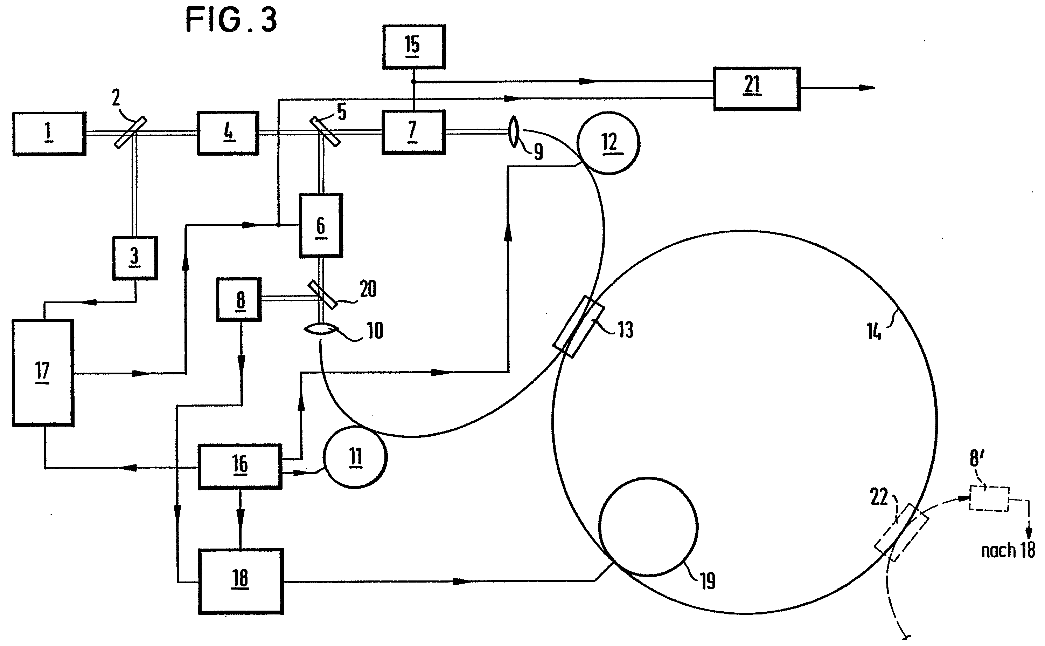

Bei Anwendung des erfindungsgemäßen Verfahrens in einer Einrichtung zur Drehratenmessung, die eine reziproke Konfiguration aufweist und für welche die weiter unten erläuterte Fig. 3 einen beispielsweisen Aufbau zeigt, ergibt sich ein besonderer Vorteil daraus, daß nur ein Modenfilter benötigt wird.

Für den Fachmann wird die zusätzliche Intensitätsänderung durch eine Modulation der Frequenzverschiebung des vom Ringresonator reflektierten Lichts bei der Auswertung des Interferenzsignals zunächst störend wirken. Bei entgegengesetzter Frequenzmodulation der Teillichtstrahlen gemäß der Erfindung aber zeigt sich, daß diese Störung herausfällt (kompensiert wird) und es erscheint eine drehratenabhängige, nichtreziproke Phasenverschiebung im Ring, insbesondere als erste Harmonische im Detektorsignal.

Fig. 2a verdeutlicht die Frequenzverschiebung des einen Teillichtstrahls und die Fig. 2b die des anderen Teillichtstrahls als Funktion der Zeit. Die Frequenzverschiebungen erfolgen gegenphasig mit annähernd gleicher Amplitude.

Außer zur unmittelbaren Auswertung kann das Drehratensignal, wie dem Fachmann an sich bekannt, auch zur Rückstellung des Kreisels verwendet werden, beispielsweise indem die Frequenz mindestens eines Teillichtstrahls mittels einer Bragg-Zelle geregelt wird.

Die Erfindung und vorteilhafte Einzelheiten, für die unter anderem auch in abhängigen Patentansprüchen Schutz beansprucht wird, werden nachfolgend unter Bezugnahme auf die Zeichnung in einer beispielsweisen Ausführungsform näher erläutert. Es zeigen:

Fig. 1a und 1b den bereits oben erläuterten Verlauf des Intensitätssignals am Ausgang eines Ringresonators, der in Reflexion betrieben wird bzw. den entsprechenden Verlauf der Phase zwischen Ein- und Ausgang des Resonators;
Fig. 2a und 2b die ebenfalls bereits erläuterte Frequenzverschiebung der beiden Teillichtstrahlen als Funktion der Zeit;
Fig. 3 ein Ausführungsbeispiel für den Aufbau einer Einrichtung zur Drehratenmessung nach dem erfindungsgemäßen Verfahren; und
Fig. 4 ein weiteres Ausführungsbeispiel für eine erfindungsgemäße Drehratenmeßeinrichtung mit vereinfachtem Aufbau bei Verwendung einer breitbandigen Lichtquelle, etwa einer Superlumineszenzdiode (SL-Diode).

Es wird zunächst auf Fig. 3 Bezug genommen: Das Licht einer kohärenten Lichtquelle 1 passiert nach Durchlaufen eines ersten halbdurchlässigen Spiegels 2 einen Modenselektor 4 und wird mittels eines zweiten halbdurchlässigen Spiegels 5 in zwei Teillichtstrahlen aufgespalten. Mit zwei Bragg-Zellen 6 und 7 wird die Lichtfrequenz jeweils um gleiche Frequenzwerte, d.h. die Eingangshochfrequenz der Bragg-Zellen, verschoben. Mittels Linsen 9 und 10 werden die Teillichtstrahlen gegenläufig in einen Faser-Ringresonator 14 über einen Koppler 13 eingestrahlt. Die bei den Teillichtstrahlen werden zusätzlich durch Frequenzmodulatoren bzw. Phasenmodulatoren 11 und 12 im Gegentakt durch einen Generator 16 moduliert, um im Auslesekanal nach der Interferenz ein moduliertes Intensitätssignal zu erhalten, das die Drehrateninformation enthält.

Das vom Ringresonator 14 reflektierte und am Koppler 13 ausgekoppelte Licht passiert die Frequenzmodulatoren 12 und 11 und die beiden Bragg-Zellen 7 und 6 erneut und wird am halbdurchlässigen Spiegel 5 wieder vereinigt. Da die Frequenzmodulatoren 11, 12 gegenphasig angesteuert werden und der Lichtweg für beide gegenläufige Lichter gleich ist, entsteht keine Differenzfrequenz der beiden Lichter durch die Frequenzmodulation bzw. durch die Bragg-Zellen 6, 7.

Betrachtet man nur einen Teillichtstrahl, beispielsweise das Licht, das die Bragg-Zelle 6 durchläuft, so ergibt sich folgende Reihenfolge: Das Licht wird zunächst in der Bragg-Zelle 6 im bestimmten Frequenzquadrat verschoben, wird dann durch den Frequenzmodulator 11 in der Phase moduliert bzw. in der Frequenz verschoben, durchläuft den Resonator 14, wird dann im Frequenzmodulator 12 ebenfalls frequenz- bzw. phasenverschoben, geht dann durch die Bragg-Zelle 7 und wird dort wieder um einen bestimmten Frequenzbetrag verschoben, um schließlich im Strahlteiler 5 wieder mit dem Licht, das in der entgegengesetzten Richtung durch den Ringresonator 14 gegangen ist, vereinigt zu werden. Die Frequenzmodulatoren 11 und 12 werden im Gegentakt betrieben, so daß bei Drehrate "0" die Frequenzverschiebung im Frequenzmodulator 11 durch den Frequenzmodulator 12 wieder aufgehoben wird und umgekehrt.

Das interferierende Licht passiert dann wiederum den Modenselektor 4 und wird am ersten halbdurchlässigen Spiegel 2 auf einen Lichtdetektor 3 gelenkt. Das vom Detektor 3 erfaßte Licht wird in einer Regelelektronik 17 demoduliert und in ein Frequenzsignal zur Nachstellung der Bragg-Zelle 6 umgesetzt. Die Bragg-Zelle 7 wird voraussetzungsgemäß mit konstanter Frequenz beaufschlagt. Durch die Regelung der Frequenz der Bragg-Zelle 6 wird die Verschiebung der Resonanzlinie des Ringresonators 14 aufgrund des Sagnac-Effekts bei einer Drehung des Resonators kompensiert.

Das reflektierte Licht vom Ringresonator 14 gelangt auf dem Weg über 11 außerdem auf einen dritten halbdurchlässigen Spiegel 20 und damit auf einen weiteren Lichtdetektor 8, wird demoduliert und mittels einer Regelungselektronik 18 erfolgt über einen Längenregler 19 eine Abstimmung der Resonanzfrequenz des Ringresonators 14 auf die Lichtquelle 1.

Die Frequenzausgangssignale der Regelelektronik 17 zur Nachstellung der Bragg-Zelle 6 sowie die Ausgangssignale eines Frequenzgenerators 15 gelangen auf den Eingang eines Auswertezählers 21, an dessen Ausgang das digitale Drehratensignal abgenommen werden kann. Der Auswertezähler 21 zählt die Signale der Regelelektronik 17 positiv und die des Frequenzgenerators 15 negativ.

Nullpunktfehler der Drehratenmeßeinrichtung gemäß der Erfindung werden wie folgt berücksichtigt:

Die Verwendung der Bragg-Zellen 6 und 7 innerhalb der erfindungsgemäßen Phasenmeßeinrichtung führt im allgemeinen zu einem Nullpunktfehler $\Delta\Phi$ der Phasendifferenz bei der Drehrate 0 von

$$\Delta\Phi = \frac{4\pi}{c} \, n \, \Delta f \cdot (L_1 - L_2) \, ,$$

wobei mit $L_1$ bzw. $L_2$ die Abstände der frequenzverschiebenden Elemente vom Gabelungspunkt am halbdurchlässigen Spiegel 5 der beiden gegenläufigen Lichtstrahlen, mit $\Delta f$ der Betrag der Frequenzverschiebung, mit n der Brechungsindex und mit c die Lichtgeschwindigkeit bezeichnet sind.

Die Fehlerphase $\Delta\Phi$ wird bei einer Drehratenmessung als Drehrate interpretiert und führt zu einem Nullpunktfehler des Kreisels.

Um nun die tatsächliche Drehrate von einer durch die Drehraten-Meßeinrichtung erzeugten Fehlerdrehrate zu unterscheiden bzw. um gegebenenfalls auch den Nullpunkt des Kreisels unter Drehung zu messen, kann der Ringresonator 14 kurzzeitig "abgeschaltet" werden. Dazu kann entweder der Ringresonator 14 stark bedämpft werden, beispielsweise durch starkes Biegen der Faser, oder der Ringresonator 14 und/oder die Lichtquelle 1 können gegeneinander verstimmt werden.

Wenn zudem die Zuleitungsfasern zum Ringresonator 14 bifilar gelegt sind, wird der Kreisel unempfindlich gegen Drehungen, da die eng parallel verlegten Fasern keine Fläche einschließen und der Ringresonator 14 wegen starker (gewollter) Dämpfung keinen wesentlichen Beitrag mehr liefert. Eine verbleibende Phasendifferenz ist dann der aktuelle Nullpunktfehler des Kreisels, der beispielsweise von einem Navigationsrechner zur Korrektur berücksichtigt werden kann.

Eine andere Möglichkeit, den Ringresonator in periodischen Abständen durch starkes Bedämpfen "abzuschalten", besteht in der Verwendung einer anpolierten Kopplerhälfte, wie sie für den Typ des sogenannten "Stanford-Kopplers" verwendet wird, die mit einem Material beschichtet wird, dessen Brechungsindex in der Größenordnung des Brechungsindex der für den Ringresonator 14 verwendeten Faser liegt. Als Beschichtungsmaterial kommen beispielsweise nematische Kristalle in Frage, deren Brechungsindex durch Anlegen elektrischer Felder verändert werden kann. Durch Änderung einer anliegenden Spannung kann, sofern der Brechungsindex unterhalb des Faserbrechungsindex eingestellt wird, erreicht werden, daß bei dem in der Faser geführten Mode kein Verlust in der Kopplerhälfte auftritt. Wird der Brechungsindex dagegen bei Anlegen einer geeigneten Spannung etwas oberhalb oder gleich dem Brechungsindex des Fasermodes eingestellt, so wird das Licht effizient aus der anpolierten Kopplerhälfte ausgekoppelt, und die Umlaufverluste im Ringresonator erhöhen sich so stark, daß er praktisch außer Funktion gesetzt ist.

Zur Messung einer solchen, den aktuellen Nullpunktfehler bestimmenden Phasendifferenz können bekannte Verfahren genutzt werden, die beim Sagnac-Interferometer zur genauen Ermittlung der Phasendifferenz herangezogen werden, beispielsweise Phasendemodulation mit Laufzeitdifferenz, periodische Umschaltung der Frequenz eines Bragg-Modulators und dergleichen. Bei der Einrichtung nach Fig. 3 wird der in der obenerläuterten Weise "abgeschaltete" Ringresonator 14 zu einem nicht-drehratenempfindlichen Sagnac-Interferometer. Eine derartige Kalibration kann wiederholt in kurzen Zeitabständen auch unter Drehung des Kreisels vorgenommen werden, beispielsweise durch kurzzeitige Addition einer Spannung zum Signal des Längenreglers 19 und gleichzeitiger kurzzeitiger Unterbrechung der Regelschleife, so daß die Abstimmung von Ringresonator 14 und Lichtquelle 1 definiert verloren geht. Der Nullpunktabgleich bei "abgeschaltetem" Ringresonator 14 erfolgt automatisch, initiiert durch einen bestimmten Programmschritt. Der ausgelesene Nullpunkt bzw. die Nullpunktdrift wird dann vom tatsächlichen Drehratensignal abgezogen, so daß die Genauigkeit der gesamten Drehratenmeßvorrichtung jederzeit gewährleistet ist.

Beim Abgleich der Drehratenmeßvorrichtung durch intermittierendes "Abschalten" des Ringresonators 14 im oben erläuterten Sinne wird es erforderlich sein, die Modulatoren 11, 12 mit relativ hoher Frequenz und/oder mit relativ hoher Aussteueramplitude zu betreiben, um ein effizientes Signal für die Phasenverschiebung in dem jetzt als Sagnac-Interferometer anzusehenden Ringresonator zu haben, das in derselben Größenordnung wie das Drehratensignal liegt. Mit diesem, mit dem Drehratensignal vergleichbaren Signal läßt sich dann die Ausleseoptik bzw. die Ausleseelektronik laufend auf einen gewünschten Nullpunkt hin einstellen.

Der besondere Vorteil der Erfindung gegenüber der bisherigen Ausnutzung des Intensitätssignals besteht vor allem darin, daß nur ein Modenfilter benötigt wird. Dies folgt daraus, daß das Interferenzsignal über einen Kanal und nicht, wie bei Intensitätsvergleichsmessungen, über zwei getrennte Kanäle verarbeitet wird. Modenfilter mit der erforderlichen guten Modenselektion sind aufwendig herzustellen und teuer.

Bei der Ausführungsform nach Fig. 3 erfolgt der Abgleich des Ringresonators 14 auf die Lichtquelle 1 durch Auskopplung über den halbdurchlässigen Spiegel 20 auf den weiteren Lichtdetektor 8, dessen Ausgangssignal über die Regelelektronik 18 die Einstellung des Längenreglers 19 bestimmt. Eine dazu alternative Möglichkeit besteht darin, im Ring selbst eine Auskopplung 22 vorzusehen, die in Fig. 3 gestrichelt dargestellt ist. Das an dieser Stelle ausgekoppelte Licht beaufschlagt einen Lichtdetektor 8', dessen Ausgangssignal über die Regelelektronik 18 wiederum den Ringresonator 14 auf die schmalbandige Lichtquelle 1 abstimmt. In diesem Fall kann auf den Koppler bzw. Spiegel 20 verzichtet werden. Eine solche Lösung kann bei Ausführung in integrierter Optik gewisse Vorteile des Aufbaus erbringen.

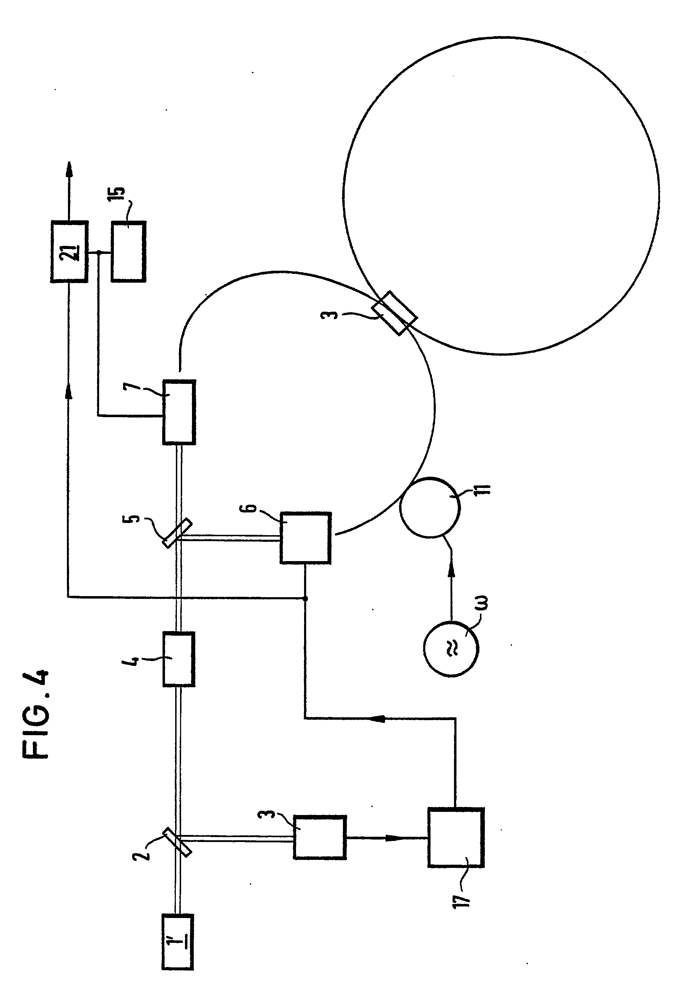

Die Fig. 4 zeigt einen vereinfachten Aufbau der erfindungsgemäßen Drehratenmeßvorrichtung bei Verwendung einer breitbandigen Lichtquelle 1', beispielsweise einer SL-Diode. In diesem Fall kann auf eine Abstimmung zwischen der Lichtquelle 1' und dem Ringresonator 14 verzichtet werden, d.h. die Regelungselektronik 18 mit Längenregler 19 entfällt, ebenso der Lichtdetektor 8 mit Spiegel 20. In diesem Fall kann, wie die Zeichnung erkennen läßt, auch auf einen der Frequenzmodulatoren 11 oder 12 verzichtet werden. Hinsichtlich des Aufbaus ergibt sich dann ein Sagnac-Interferometer, bei dem die übliche Spule durch einen Ringresonator ersetzt ist. Abgesehen von dem vereinfachten Aufbau ergibt sich der weitere Vorteil, daß sich keine Intensitätsänderung am Ausgang des Resonators beobachten läßt, sondern nur reine Phasenverschiebungen auftreten bei Änderung der Eingangsphase. Bei diesem Aufbau wird der Ringresonator 14 im wesentlichen nur noch als Laufzeitstrecke verwendet und es wird wesentlich weniger Faser für dieselbe Phasenempfindlichkeit benötigt. Allerdings tritt am Detektor 3 eine geringere Lichtintensität auf. Aufgrund der einem Sagnac-Interferometer ähnlichen Anordnung jedoch sind die Rauschanteile deutlich niedriger.

**Patentansprüche**

1. Verfahren zur Drehratenauslesung mittels eines passiven optischen Resonators (14), bei dem Licht aus einer abgestimmten kohärenten Lichtquelle (1) ein Modenfilter (4) durchläuft, in zwei Teillichtstrahlen aufgespalten und in entgegengesetzten Richtungen in den Resonator (14), der als Ringresonator ausgebildet ist, eingestrahlt wird und bei dem Lichtsignale aus beiden Umlaufrichtungen wieder ausgekoppelt und zur Gewinnung eines Drehratensignals detektiert werden, und bei dem
   – die Frequenzen der beiden Teillichtstrahlen vor Eintritt in den und nach Austritt aus dem in Reflexion betriebenen Ringresonator (14) um gleiche Frequenzwerte im entgegengesetzten Sinn verschoben werden;
   – diese Frequenzverschiebung moduliert wird;
   – die Teillichtstrahlen der ausgekoppelten Lichtsignale zur Interferenz gebracht werden und in umgekehrter Richtung das Modenfilter (4) passieren;
   – das Interferenzsignal mittels eines opto-elektronischen Wandlers (3) erfaßt wird; und bei dem
   – das so gewonnene Interferenzsignal hinsichtlich der Modulationsfrequenz oder deren Harmonischen demoduliert wird und daraus das Drehratensignal gewonnen wird.

2. Verfahren nach Anspruch 1, dadurch gekennzeichnet, daß zum Selbstabgleich der Ausleseoptik und -elektronik der Ringresonator (14) in bestimmten Zeitabständen durch Verstimmen des Ringresonators (14) und/oder der Lichtquelle (1) kurzzeitig außer Funktion gesetzt wird.

3. Verfahren nach Anspruch 1, dadurch gekennzeichnet, daß zum Selbstabgleich der Ausleseoptik und Ausleseelektronik der Ringresonator (14) kurzzeitig durch Erhöhung der Verluste im Ringresonator (14) außer Funktion gesetzt wird.

4. Verfahren nach Anspruch 3, dadurch gekennzeichnet, daß bei außer Funktion gesetztem Ringresonator (14) das Modulationsverfahren abweichend vom Meßbetrieb so verändert wird, daß sich für den Nullpunktabgleich der Ausleseoptik (3) und der Ausleseelektronik (17) ein Signal ergibt, das amplitudenmäßig etwa in der Größenordnung des Drehratenmeßsignals liegt.

5. Verfahren nach Anspruch 1, dadurch gekennzeichnet, daß mindestens die Frequenz eines der beiden eingestrahlten Lichtsignale zusätzlich verschoben wird, wobei die Frequenzverschiebung durch das aus der Demodulation des Interferenzsignals gewonnene Signal bestimmt ist.

6. Verfahren nach Anspruch 5, dadurch gekennzeichnet, daß die zusätzliche Frequenzverschiebung durch mindestens eine Bragg-Zelle (6 oder 7) erzeugt wird.

7. Verfahren nach Anspruch 5, dadurch gekennzeichnet, daß die zusätzliche Frequenzverschiebung als stetige Phasenverschiebung mittels Phasenmodulatoren bewirkt wird.

8. Verfahren nach Anspruch 5, dadurch gekennzeichnet, daß die die zusätzliche Frequenzverschiebung bewirkenden Elemente in integrierter Optik ausgeführt sind.

9. Verfahren nach einem der Ansprüche 5 bis 8, dadurch gekennzeichnet, daß die Differenz der Frequenzbeträge, um die die Frequenzen der beiden Lichtstrahlen von den frequenzverschiebenden Elementen (6, 7) verschoben werden, zur Drehratenermittlung genutzt wird.

10. Verfahren nach Anspruch 1 oder 4, dadurch gekennzeichnet, daß die Frequenz- oder Phasenmodulation der beiden Teillichtstrahlen mittels integrierter Optik erfolgt.

11. Verfahren nach einem der vorstehenden Ansprüche, dadurch gekennzeichnet, daß zur Erhöhung der Nullpunktstabilität des Ringresonators (14) Polarisatoren als modenselektierende Elemente angeordnet sind.

12. Verfahren nach Anspruch 1, dadurch gekennzeichnet, daß zur Abstimmung des Ringresonators (14) auf die Lichtquelle (1) an wenigstens einer Stelle (8) die durchgelassene und/oder reflektierte Intensität des Ringresonators (8) gemessen wird.

13. Verfahren nach Anspruch 12, dadurch gekennzeichnet, daß am Ringresonator (14) eine Auskopplung (22) vorgesehen ist und das an dieser Stelle ausgekoppelte Licht auf einen lichtempfindlichen Detektor (8') gelangt und zur Weiterverarbeitung auf eine Nachstellelektronik (18) geschaltet wird, die den Ringresonator (14) auf die schmalbandige Lichtquelle (1) abstimmt.

14. Verfahren zur Drehratenauslesung mittels eines passiven optischen Resonators (14), bei dem Licht aus einer kohärenten Lichtquelle (1) ein Modenfilter (4) durchläuft, in zwei Teillichtstrahlen aufgespalten und in entgegengesetzten Richtungen in den Resonator (14), der als Ringresonator ausgebildet ist, eingestrahlt wird und bei dem Lichtsignale aus beiden Umlaufrichtungen wieder ausgekoppelt und zur Gewinnung eines Drehratensignals detektiert werden, und bei dem
- als Lichtquelle (1) eine breitbandige Lichtquelle (1') verwendet wird;
- die Frequenzen der beiden Teillichtstrahlen vor Eintritt in den und nach dem Austritt aus dem in Reflexion betriebenen Ringresonator (14) um gleiche Frequenzwerte im entgegengesetzten Sinn verschoben werden;
- diese Frequenzverschiebung hinsichtlich eines eingestrahlten und hinsichtlich des ausgekoppelten Anteils des anderen Lichtstrahls moduliert wird;
- die Teillichtstrahlen der ausgekoppelten Lichtsignale zur Interferenz gebracht werden und in umgekehrter Richtung das Modenfilter (4) passieren;
- das Interferenzsignal mittels eines opto-elektronischen Wandlers (3) erfaßt wird; und bei dem
- das so gewonnene Interferenzsignal hinsichtlich der Modulationsfrequenz oder deren Harmonischen demoduliert wird und daraus das Drehratensignal gewonnen wird.

**Claims**

1. Method for rate of rotation readout by means of a passive optical resonator (14), in which light from a tuned coherent light source (1) passes through a mode filter (4), is split up into two partial light beams and is radiated in opposite directions into the resonator (14) which is designed as a ring resonator and in which light signals from both circulation directions are coupled out again and are detected in order to obtain a rate of rotation signal, and in which
- before entry into and after exit from the ring resonator (14) operated in reflection, the frequencies of both partial light beams are shifted by equal frequency values in the opposite sense;
- this frequency shift is modulated;
- the partial light beams of the light signals coupled out are brought to interference and pass through the mode filter (4) in the opposite direction;
- the interference signal is detected by means of an opto-electronic converter (3); and in which
- the interference signal obtained in this manner is demodulated with respect to the modulation frequency or its harmonics, and the rate of rotation signal is obtained therefrom.

2. Method according to Claim 1, characterized in that, for the self-compensation of the optical readout system and electronic readout system, the ring resonator (14) is put out of operation for a brief period at determined time intervals by detuning the ring resonator (14) and/or the light source (1).

3. Method according to Claim 1, characterized in that, for the self-compensation of the optical readout system and electronic readout system, the ring resonator (14) is put out of operation for a brief period by increasing the losses in the ring resonator (14).

4. Method according to Claim 3, characterized in that, when the ring resonator (14) is put out of operation, the modulation procedure is varied, by way of a difference from the measurement operation, in such a manner that for the null point compensation of the optical readout system (3) and of the electronic readout system (17) a signal is formed, which, in terms of amplitude, is approximately of the order of magnitude of the rate of rotation measurement signal.

5. Method according to Claim 1, characterized in that at least the frequency of one of the two radiated light signals is additionally shifted, the frequency shift being determined by the signal obtained from the demodulation of the interference signal.

6. Method according to Claim 5, characterized in that the additional frequency shift is generated by at least one Bragg cell (6 or 7).

7. Method according to Claim 5, characterized in that the additional frequency shift is effected as a steady phase shift by means of phase modulators.

8. Method according to Claim 5, characterized in that the elements effecting the additional frequency shift are constructed in integrated optics.

9. Method according to one of Claims 5 to 8, characterized in that the difference of the frequency amounts by which the frequencies of the two light-beams are shifted by the frequency-shifting elements (6, 7) is used for the rate of rotation determination.

10. Method according to Claim 1 or 4, characterized in that the frequency modulation or phase modulation of the two partial light beams takes place by means of integrated optics.

11. Method according to one of the preceding claims, characterized in that, in order to increase the null point stability of the ring resonator (14) polarizers are disposed as mode-selecting elements.

12. Method according to Claim 1, characterized in that, for the tuning of the ring resonator (14) to the light source (1), the transmitted and/or reflected intensity of the ring resonator (8) is measured at at least one position (8).

13. Method according to Claim 12, characterized in that a coupling-out location (22) is provided at the ring resonator (14) and the light coupled out at this location passes to a light-sensitive detector (8') and is switched for further processing to an electronic adjusting system (18), which tunes the ring resonator (14) to the narrow-band light source (1).

14. Method for rate of rotation readout by means of a passive optical resonator (14), in which light from a coherent light source (1) passes through a mode filter (4), is split up into two partial light beams and is radiated in opposite directions into the resonator (14), which is designed as a ring resonator, and in which light signals from both circulation directions are coupled out again and are detected in order to obtain a rate of rotation signal, and in which
– a broad-band light source (1') is employed as light source (1);
– before entry into and after exit from the ring resonator (14) operated in reflection, the frequencies of both partial light beams are shifted by equal frequency values in the opposite sense;
– this frequency shift is modulated with respect to a radiated and with respect to the coupled-out component of the other light beam;
– the partial light beams of the light signals coupled out are brought to interference and pass through the mode filter (4) in the opposite direction;
– the interference signal is detected by means of an opto-electronic converter (3); and in which
– the interference signal obtained in this manner is demodulated with respect to the modulation frequency or its harmonics, and the rate of rotation signal is obtained therefrom.

**Revendications**

1. Procédé de mesure de vitesse angulaire utilisant un résonateur optique passif (14) dans lequel la lumière issue d'une source de lumière cohérente (1) traverse un filtre de modes (4), est divisée en deux faisceaux lumineux partiels et envoyée dans deux directions opposées dans le résonateur (14) réalisé sous la forme d'un résonateur annulaire, dans lequel des signaux lumineux provenant des deux directions de circulation sont à nouveau découplés et détectés pour l'élaboration d'un signal de vitesse angulaire, et dans lequel
– les fréquences des deux faisceaux lumineux partiels sont décalées en sens opposé des mêmes valeurs de fréquence avant l'entrée dans le et après la sortie du résonateur annulaire (14) fonctionnant en réflexion;
– ce décalage de fréquence est modulé;

– les faisceaux lumineux partiels des signaux lumineux découplés sont mis en interférence et traversent le filtre de modes (4) dans le sens opposé;
– le signal d'interférence est détecté au moyen d'un convertisseur opto-électronique (3); et dans lequel
– le signal d'interférence ainsi obtenu est démodulé eu égard à la fréquence de modulation ou à son harmonique, et à partir de cela est obtenu le signal de vitesse angulaire.

2. Procédé selon la revendication 1, caractérisé en ce que, pour l'équilibrage automatique de l'optique et de l'électronique de sélection, le résonateur annulaire (14) est temporairement mis hors service à des intervalles déterminés en désaccordant le résonateur annulaire (14) et/ou la source lumineuse (1).

3. Procédé selon la revendication 1, caractérisé en ce que, pour l'équilibrage automatique de l'optique de sélection et de l'électronique de sélection, le résonateur annulaire (14) est temporairement mis hors service en augmentant les pertes dans le résonateur annulaire (14).

4. Procédé selon la revendication 3, caractérisé en ce que, lorsque le résonateur annulaire (14) est mis hors service, le procédé de modulation est modifié par rapport au mode de mesure de manière à obtenir pour la compensation à zéro de l'optique de sélection (3) et de l'électronique de sélection (17) un signal dont l'amplitude est à peu près de l'ordre du signal de mesure de la vitesse angulaire.

5. Procédé selon la revendication 1, caractérisé en ce qu'au moins la fréquence des deux signaux lumineux incidents subit un décalage supplémentaire, le décalage de fréquence étant déterminé par le signal obtenu à partir de la démodulation du signal d'interférence.

6. Procédé selon la revendication 5, caractérisé en ce que le décalage de fréquence supplémentaire est provoqué par au moins un cristal de Bragg (6 ou 7).

7. Procédé selon la revendication 5, caractérisé en ce que le décalage de fréquence supplémentaire est provoqué en tant que déphasage continu au moyen de modulateurs de phase.

8. Procédé selon la revendication 5, caractérisé en ce que les éléments provoquant le décalage de fréquence supplémentaire sont réalisés sous la forme de composants optiques intégrés.

9. Procédé selon l'une des revendications 5 à 8, caractérisé en ce que la différence des valeurs de fréquence de laquelle les fréquences des deux faisceaux lumineux sont décalées par les éléments de décalage de fréquence (6, 7) est utilisée pour la détermination de la vitesse angulaire.

10. Procédé selon l'une des revendications 1 ou 4, caractérisé en ce que la modulation de fréquence ou de phase des deux faisceaux lumineux partiels est réalisée à l'aide de composants optiques intégrés.

11. Procédé selon l'une des revendications 1 à 10, caractérisé en ce que, pour l'augmentation de la stabilité du zéro du résonateur annulaire (14), des polariseurs sont montés en tant qu'éléments de sélection de mode.

12. Procédé selon la revendication 1, caractérisé en ce que, pour accorder le résonateur annulaire (14) à la source lumineuse (1), l'intensité transmise et/ou réfléchie du résonateur annulaire (8) est mesurée en au moins un endroit (8).

13. Procédé selon la revendication 12, caractérisé en ce que sur le résonateur annulaire (14) est prévu un découplage (22) et que la lumière découplée à cet endroit est transmise à un détecteur photosensible (8') et envoyée, pour le traitement ultérieur, à une électronique de réglage (18) qui accorde le résonateur annulaire (14) à la source lumineuse (1) à bande étroite.

14. Procédé de sélection de vitesses angulaires au moyen d'un résonateur optique passif (14) dans lequel la lumière issue d'une source de lumière cohérente (1) traverse un filtre de modes (4), est divisée en deux faisceaux lumineux partiels et envoyée dans deux directions opposées dans le résonateur (14) réalisé sous la forme d'un résonateur annulaire, dans lequel des signaux lumineux provenant des deux directions de circulation sont à nouveau découplés et détectés pour l'élaboration d'un signal de vitesse angulaire, et dans lequel
– une source de lumière à large bande (1') est utilisée comme source de lumière (1);
– les fréquences des deux faisceaux lumineux partiels sont décalées en sens opposé des mêmes valeurs de fréquence avant l'entrée dans le et après la sortie du résonateur annulaire (14) fonctionnant en réflexion;
– ce décalage de fréquence est modulé eu égard à une composante couplée et à une composante découplée de l'autre faisceau lumineux;
– les faisceaux lumineux partiels des signaux lumineux découplés sont mis en interférence et traversent le filtre de modes (4) dans le sens opposé;
– le signal d'interférence est détecté au moyen d'un convertisseur opto-électronique (3); et dans lequel
– le signal d'interférence ainsi obtenu est démodulé eu égard à la fréquence de modulation ou à son harmonique, et à partier de cela est obtenu le signal de vitesse angulaire.

FIG.2a

Zeit

Frequenzverschiebung

FIG.2b

Zeit

Frequenzverschiebung

FIG.1a

Frequenz

Intensität

FIG.1b

Frequenz

Phase

# FIG.3

EP 0 254 756 B1

nach 18

# FIG.4

EP 0 254 756 B1